# EUROPÄISCHE PATENTSCHRIFT

(11) **EP 2 388 675 B1**
(45) Veröffentlichungstag und Bekanntmachung des Hinweises auf die Patenterteilung: **07.10.2015**
(21) Anmeldenummer: 11166301.9
(22) Anmeldetag: 17.05.2011
(51) Int. Cl.: G05D 16/10

(54) **Druckmindervorrichtung sowie Druckluftverteiler mit einer Druckmindervorrichtung**
Pressure reduction device and pressurised air distributor with same
Dispositif de réduction de pression et distributeur pneumatique doté d'un dispositif de réduction de pression

(30) Priorität: 21.05.2010 DE 102010022179
(43) Veröffentlichungstag der Anmeldung: 23.11.2011
(73) Patentinhaber: PREBENA Wilfried Bornemann GmbH & Co. KG, 63679 Schotten (DE)
(72) Erfinder: Maurer, Thorsten, 63679 Schotten (DE)
(74) Vertreter: advotec.

(56) Entgegenhaltungen:
- US-A- 5 860 447
- US-A1- 2009 078 321
- US-B1- 7 334 598

## Beschreibung

Die vorliegende Erfindung betrifft einen Druckluftverteiler mit einer Druckmindervorrichtung nach dem Oberbegriff des Anspruchs 1.

Grundsätzlich besteht seit längerem nun schon die Möglichkeit, derartige Druckluft-Arbeitsgeräte in einem Netzbetrieb zu betrieben, bei dem die Druckluft-Arbeitsgeräte an ein stationäres Druckluftverteilernetz angeschlossen sind. Dabei ist der durch die Druckluftquelle zur Verfügung gestellte Netz-Luftdruck in der Regel nur unwesentlich höher als der für die Druckluft-Arbeitsgeräte benötigte Arbeitsdruck, der regelmäßig bis 10 bar beträgt.

Alternativ zum Betrieb eines Druckluft-Arbeitsgerätes mit dem Netz-Luftdruck ist es auch möglich, die Druckluft-Arbeitsgeräte unabhängig vom Druckluft-Netz zu betreiben, wobei ein austauschbar mit dem Druckluft-Arbeitsgerät verbundener, beispielsweise als Kartusche ausgebildeter Druckmittelspeicher vorgesehen wird, der aufgrund seines begrenzten Volumens mit einem unter hohem Druck stehenden Druckluftvolumen befüllt ist. Der Fülldruck derartiger Druckmittelspeicher liegt daher häufig mehrere Größenordungen über dem Netzdruck und beträgt häufig etwa 300 bar.

Eine Druckmindervorrichtung für Druckluftgeräte, die netzunabhängig mit einem Druckmittelspeicher versehen sind, muss daher in der Lage sein, eine Reduzierung eines derartig hohen Eingangsdrucks auf einen Arbeitsdruck, der eine ausreichend lange Betriebsdauer des Gerätes ermöglicht, betriebssicher zu gewährleisten. Darüber hinaus ist es wünschenswert, dass eine solche Druckmindervorrichtung, für den Fall, dass sie unmittelbar am Arbeitsgerät angeordnet ist, möglichst klein und damit gewichtssparend ausgebildet ist.

Aus der US 5,860,447 A ist eine Druckmindervorrichtung mit einer Druckanschlusseinrichtung für ein mit einem Arbeitsdruck betriebenes Arbeitsgerät aufweist bekannt. Die Druckmindervorrichtung weist eine Entlüftungseinrichtung mit einem Entlüftungskolben auf, der permanent mit dem Eingangsdruck beaufschlagt und in seiner Schließstellung gehalten wird. Bei einer Entfernung des Druckanschlusses erfolgt eine Betätigung der Entlüftungseinrichtung dadurch, dass der Entlüftungskolben durch den Arbeitsdruck in seiner Entlüftungsstellung verschoben wird und damit eine Entlüftung des Arbeitsdruckraums über die Eingangsdruckkanäle erfolgen kann.

Die US 7,334,598 B1 zeigt eine insbesondere zur Verwendung an Gaskartuschen ausgelegte Druckmindervorrichtung mit einer Druckanschlusseinrichtung für ein Arbeitsgerät.

Aus der US 2009/0078321 A1 ist eine Druckmindervorrichtung bekannt, die insbesondere für hohe Drücke geeignet ist und einen einfachen Aufbau mit zwei über eine Bajonettverbindung miteinander verbundene Gehäusehälften aufweist.

Der vorliegenden Erfindung liegt die Aufgabe zu Grunde, eine Druckmindervorrichtung für druckmittelbetriebene Arbeitsgeräte vorzuschlagen, die vielseitiger einsetzbar ist.

Zur Lösung dieser Aufgabe wird ein Druckluftverteiler mit den Merkmalen des Anspruchs 1 vorgeschlagen.

Der erfindungsgemäße Druckluftverteiler kombiniert eine Druckmindervorrichtung mit einem Geräteanschlussteil, das parallel angeordnete Geräteanschlusseinrichtungen aufweist, von denen eine über ein Druckminderventil mit dem Arbeitsdruckkanal der Druckmindervorrichtung verbunden ist, so dass wahlweise die eine Geräteanschlusseinrichtung unmittelbar über den Arbeitsdruckausgang der Druckmindervorrichtung mit dem in der Druckmindervorrichtung eingestellten Arbeitsdruck versorgt wird, und die weitere, mit dem Druckminderventil versehene Geräteanschlusseinrichtung einen gegenüber dem in der Druckmindervorrichtung eingestellten Arbeitsdruck reduzierten Arbeitsdruck ermöglicht.

Der erfindungsgemäße Druckluftverteiler ermöglicht somit einerseits den Anschluss konventioneller Arbeitsgeräte, die mit einem Arbeitsdruck von bis zu 10 bar betrieben werden, und darüber hinaus auch den Anschluss von Arbeitsgeräten, die mit einem erhöhten Arbeitsdruck betrieben werden, der ein mehrfaches des üblichen Arbeitsdrucks beträgt und beispielsweise im Bereich von 20 bis 25 bar liegen kann. Hierdurch kann der erfindungsgemäße Druckluftverteiler zur Versorgung von Arbeitsgeräten mit Druckluft verwendet werden, die im Falle von als Austreibvorrichtungen ausgebildeten Arbeitsgeräten, bei gleicher Austreibkraft wie Niederdruck-Arbeitsgeräte mit einem höheren Arbeitsdruck betrieben werden, so dass der in dem Arbeitsgerät verwendete Austreibkolben eine vergleichsweise kleinere Arbeitskolbenfläche aufweisen kann. Durch die kleinere Dimensionierung der Austreibkolbenfläche werden geringere Druckverluste in dem Arbeitsgerät ermöglicht, so dass insbesondere in dem Fall, dass austauschbare Druckmittelspeicher mit dem Arbeitsgerät verwendet werden, längere Betriebszeiten des mit dem Druckmittelspeicher versehenen Arbeitsgerätes möglich sind.

Der erfindungsgemäße Druckluftverteiler weist eine Druckmindervorrichtung auf mit einer Druckanschlusseinrichtung zum Anschluss an eine Eingangsdruckquelle, einen Arbeitsdruckausgang zur Verbindung mit einem Arbeitsgerät und ein Druckminderventil zur Trennung eines Eingangsdruckkanals von einem Arbeitsdruckraum auf, wobei das Druckminderventil einen doppelt wirkenden Ventilkolben mit einer entgegen der Federkraft einer Ventilfeder vom Arbeitsdruck beaufschlagten Arbeitsdruckkolbenfläche und eine vom Eingangsdruck in Richtung der Federkraft der Ventilfeder beaufschlagte Dichtkolbenfläche aufweist. Die Dichtkolbenfläche dient zur Abdichtung des Eingangsdruckkanals vom Arbeitsdruckraum, wobei der Arbeitsdruckraum über einen Entlüftungsknal mit einer an der Druckanschlusseinrichtung ausgebildeten Entlüftungseinrichtung verbunden ist, derart, dass eine durch ein Anschlussstück der Eingangsdruckquelle in seiner Schließstellung gehaltener Entlüftungskolben der Entlüftungseinrichtung mit dem Arbeitsdruck beaufschlagt wird.

Die Druckmindervorrichtung erweist sich als besonders betriebssicher, da durch den vom Arbeitsdruck betätigten Ventilkolben die Schließfunktion des Druckminderventils entgegen dem Eingangsdruck unabhängig von der Ventilfeder gewährleistet ist. Die zur Vorspannung des Druckminderventils verwandte Ventilfeder dient lediglich zur Einstellung der Höhe des Arbeitsdrucks und zur Definition einer Öffnungsstellung des Ventils, so dass beispielsweise im Falle eines Versagens der Ventilfeder in jedem Fall die Schließstellung des Ventils gesichert ist. Daher ist die Druckmindervorrichtung in besonderer Weise geeignet zur Verwendung bei hohen Eingangsdrücken, wie es beispielsweise beim Anschluss eines Druckmittelspeichers an die Druckanschlusseinrichtung der Druckmindervorrichtung der Fall ist.

Weiter eignet sich die Druckmindervorrichtung in besonderem Maße zur Verwendung mit Druckmittelspeichern, da die Entlüftungseinrichtung zur Entlüftung des Arbeitsdruckraums mit der Druckanschlusseinrichtung zum Anschluss des Druckmittelspeichers kombiniert ist,so dass die Betätigung der Entlüftungseinrichtung zwangsläufig dann erfolgt, wenn der Druckmittelspeicher von der Druckmindervorrichtung bzw. der Druckanschlusseinrichtung getrennt wird. Hierdurch erfolgt quasi automatisch mit der Entfernung des Druckmittelspeichers von der Druckmindervorrichtung eine Entlüftung des Arbeitsdruckraums, so dass sichergestellt ist, dass ein an den Arbeitsdruckausgang angeschlossenes Arbeitsgerät nach Entfernung des Druckmittelspeichers nicht mit Druck beaufschlagt ist. Dies ist besonders wichtig in dem Fall, wenn es sich bei dem angeschlossenen Druckluftgerät um eine druckluftbetriebene Austreibvorrichtung, wie beispielsweise einen Druckluftnagler, handelt, um sicherzustellen, dass ein versehentliches Auslösen der Austreibvorrichtung nach Entfernung des Druckmittelspeichers nicht möglich ist. Hierdurch wird in besonderem Maße der Betriebssicherheit bzw. dem Arbeitsschutz Rechnung getragen, da jederzeit ein Druckmittelspeicher unabhängig von dessen Füllzustand von der Druckmindervorrichtung entfernt werden kann.

Eine besonders funktionssichere und gleichzeitig besonders platzsparende Ausführung der Entlüftungseinrichtung wird möglich, wenn diese als Bestandteil der Druckanschlusseinrichtung ausgebildet ist, derart, dass ein Anschlussstutzen der Druckanschlusseinrichtung zur Ausbildung eines Entlüftungszylinders für den Entlüftungskolben von einer Zylinderhülse umgeben ist, derart, dass der Entlüftungskolben bei einer Montage des Anschlussstücks an die Druckanschlusseinrichtung in seine Schließstellung verschoben wird.

Gemäß einer besonders bevorzugten Ausführungsform der Entlüftungseinrichtung ist eine Entlüftung aus dem Entlüftungszylinder ohne zusätzliche, nach außen geführte Entlüftungsbohrung notwendig, wenn die Entlüftung durch einen zwischen dem Anschlussstutzen und dem Entlüftungskolben gebildeten Ringspalt erfolgt.

Eine weitere Reduzierung des Bauvolumens der Druckmindervorrichtung wird möglich, wenn der Ventilkolben des Druckminderventils zur Beaufschlagung der Arbeitsdruckkolbenfläche mit einer in einem Kolbenschaft ausgebildeten zentralen Durchgangsbohrung versehen ist. In diesem Fall dient der Kolbenschaft nicht nur als Kraftübertragungselement zwischen der Arbeitsdruckkolbenfläche und der Dichtkolbenfläche, sondern darüber hinaus gleichzeitig zur Ausbildung eines Kanals zur Beaufschlagung der Arbeitsdruckkolbenfläche mit dem Arbeitsdruck.

Wenn zur Ausbildung der Ventilfeder einer auf dem Kolbenschaft geführte Druckfeder vorgesehen ist, die sich mit einem Federende an einem in einer Ventilbohrung ausgebildeten Gehäuseabsatz und mit dem gegenüberliegenden Federende an einem am Kolbenschaft ausgebildeten Stützbund abstützt, ist für eine besonders kompakte Anordnung der Ventilfeder in der Druckmindervorrichtung gesorgt.

Eine besonders vorteilhafte Ausführung des Druckluftverteilers wird möglich, wenn das Geräteanschlussteil ein modular mit der Druckmindervorrichtung verbindbares Anschlussgehäuse aufweist, da somit auf einfache Art und Weise unterschiedliche Geräteanschlussteile mit der Druckmindervorrichtung kombinierbar sind.

Besonders vorteilhaft für die Handhabung des Druckluftverteilers wirkt sich aus, wenn die Druckmindervorrichtung zusammen mit dem Geräteanschlussteil in einem gemeinsamen Gehäuse aufgenommen ist, so dass die Funktionseinheiten des Druckluftverteilers, also die Druckmindervorrichtung und das Geräteanschlussteil lediglich nach funktionalen Gesichtspunkten gestaltet sein können ohne Rücksicht auf das äußere Erscheinungsbild, welches durch das gemeinsame Gehäuse bestimmt ist.

Auf die Betriebssicherheit des Druckluftverteilers wirkt sich besonders vorteilhaft aus, wenn das Gehäuse als Schutzgehäuse ausgebildet ist, so dass die Funktionseinheiten des Druckluftverteilers, also die Druckmindervorrichtung und das Geräteanschlussteil, geschützt vor mechanischen Belastungen in dem Gehäuse aufgenommen sind.

Um insbesondere bei sehr niedrigen Umgebungstemperaturen einen funktionssicheren Betrieb des Druckluftverteilers zu unterstützen, ist es vorteilhaft, wenn das Gehäuse thermisch isolierend ausgebildet ist.

Nachfolgend wird eine bevorzugte Ausführungsform der Druckmindervorrichtung sowie eines mit einer Druckmindervorrichtung versehenen Druckluftverteilers anhand der Zeichnungen näher erläutert.

Es zeigen:
- **Fig. 1**:: eine Ausführungsform einer Druckmindervorrichtung mit Darstellung einer Druckanschlusseinrichtung zum Anschluss an eine Eingangsdruckquelle;
- **Fig. 2**:: eine Schnittdarstellung der in **Fig. 1** dargestellten Druckmindervorrichtung gemäß Schnittlinienverlauf II-II in **Fig. 1****;**
- **Fig. 3**:: eine Schnittdarstellung der in **Fig. 1** dargestellten Druckmindervorrichtung gemäß Schnittlinienverlauf III-III in **Fig. 1****;**
- **Fig. 4**:: eine Seitenansicht der in **Fig. 1** dargestellten Druckmindervorrichtung mit Darstellung eines Arbeitsdruckausgangs;
- **Fig. 5**:: eine **Fig. 2** entsprechende Schnittdarstellung der Druckmindervorrichtung mit einem mit der Druckanschlusseinrichtung verbundenen Anschlussstück eines Druckmittelspeichers und geöffnetem Druckminderventil;
- **Fig. 6**:: eine **Fig. 2** entsprechende Schnittdarstellung der Druckmindervorrichtung mit geschlossenem Druckminderventil;
- **Fig. 7**:: eine **Fig. 2** entsprechende Schnittdarstellung der Druckmindervorrichtung während der Entlüftung;
- **Fig. 8**:: eine Ausführungsform eines Druckluftverteilers mit einer Druckmindervorrichtung und einem an die Druckmindervorrichtung angeschlossenen Geräteanschlussteil in isometrischer Darstellung;
- **Fig. 9**:: eine Schnittdarstellung des in **Fig. 11** in Draufsicht dargestellten Geräteanschlussteils;
- **Fig. 10**:: eine Seitenansicht des an die Druckmindervorrichtung angeschlossenen Geräteanschlußteils;
- **Fig. 11**:: das an die Druckmindervorrichtung angeschlossene Geräteanschlußteil in Draufsicht;
- **Fig. 12:**: eine Teilschnittdarstellung des in **Fig. 10** dargestellten Geräteanschlußteils;
- **Fig. 13**:: der in einem Schutzgehäuse aufgenommene Druckverteiler in isometrischer Darstellung;
- **Fig. 14**:: der in einer unteren Halbschale des Schutzgehäuses aufgenommene Druckverteiler in isometrischer Darstellung.

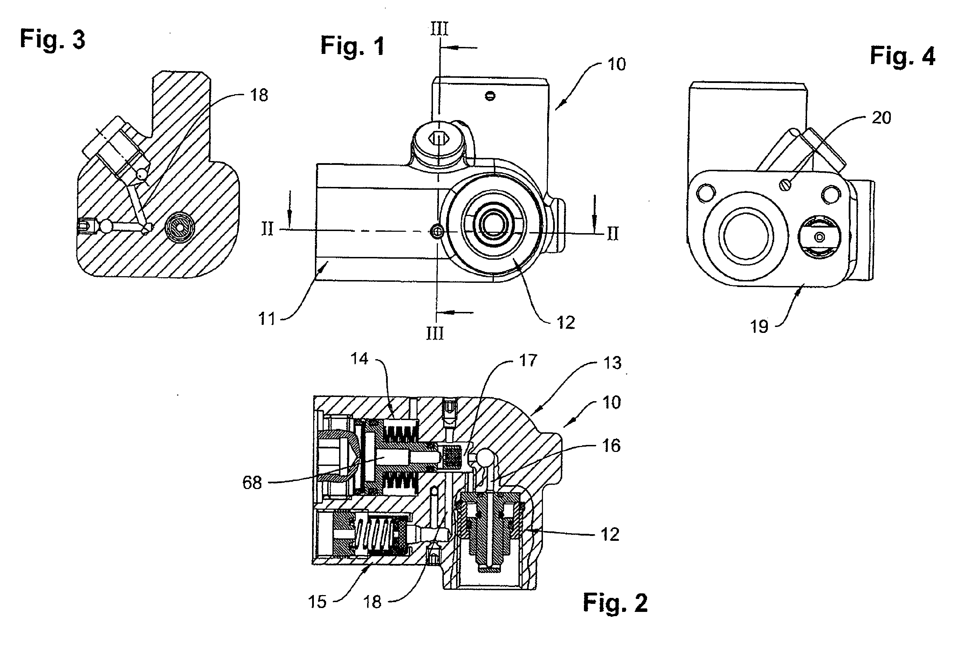

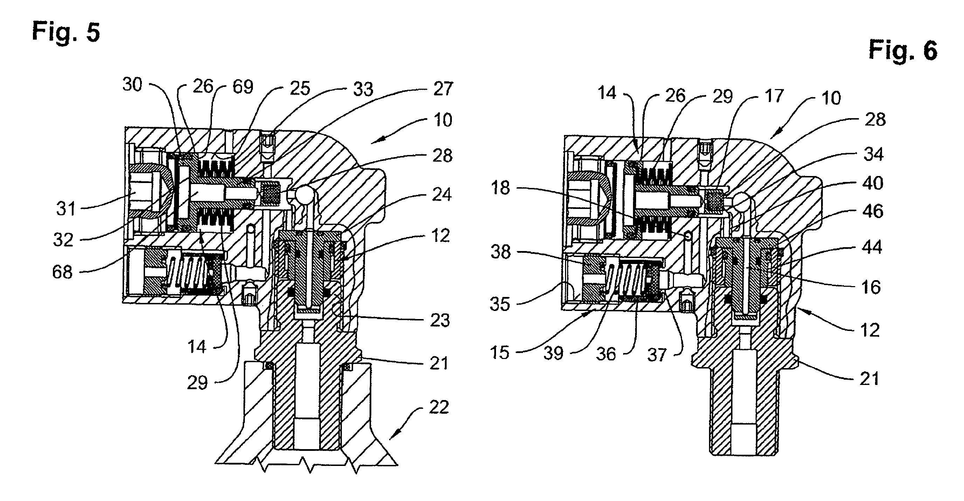

**Fig. 1** zeigt eine Druckmindervorrichtung 10 mit einer an einer Druckanschlussseite 11 angeordneten Druckanschlusseinrichtung 12, die zum Anschluss eines beispielsweise als Kartusche 22 (**Fig. 5**) ausgebildeten Druckmittelspeichers dient.

**Fig. 2** zeigt die Druckmindervorrichtung 10 in einer Längsschnittdarstellung, mit der in einem Druckmindergehäuse 13 ausgebildeten Druckanschlusseinrichtung 12, einem Druckminderventil 14 und einem Überdruckventil 15. Die Druckanschlusseinrichtung 12 ist über einen Eingangsdruckkanal 16 mit einem Arbeitsdruckraum 17 verbunden, der über einen Arbeitsdruckkanal 18 (**Fig. 3**) an einen in einer Druckausgangsseite 19 angeordneten Arbeitsdruckausgang 20 (**Fig. 4**) angeschlossen ist. Parallel zum Arbeitsdruckausgang 20 steht der Arbeitsdruckkanal 18 in Verbindung mit dem Überdruckventil 15 (**Fig. 2**).

**Fig. 5** zeigt die Druckmindervorrichtung 10 nach Anschluss der mit einem Anschlussstück 21 als Mundstück versehenen Kartusche 22. Das Anschlussstück 21 der Kartusche 22 ist hierzu in eine Aufnahmebohrung 23 der Druckanschlusseinrichtung 12 eingeschraubt und stellt eine Druckverbindung zwischen der Kartusche 22 und einem Anschlussstutzen 24 der Druckanschlusseinrichtung 12 her, so dass über den Eingangsdruckkanal 16 ein in einer Ventilaufnahmebohrung 25 angeordneter Ventilkolben 26 auf seiner an einem axialen Ende eines Ventilschafts 27 ausgebildeten Dichtkolbenfläche 28 mit dem Eingangsdruck aus der Kartusche 22 beaufschlagt wird.

In dem in **Fig. 5** dargestellten Ausgangszustand des Druckminderventils 14 wird der Ventilkolben 26 des Druckminderventils 14 durch eine konzentrisch auf dem Ventilschaft 27 aufgenommene Druckfeder 29, die im vorliegenden Fall als Tellerfederpaket ausgebildet ist, in seine Öffnungsstellung vorgespannt, wobei ein Kolbenboden 30 an einem die Ventilaufnahmebohrung 25 von der Montageseite her verschließenden Bohrungsstopfen 31 anliegt. In dieser Ausgangsstellung verbleibt der Ventilkolben 26 so lange, bis durch das durch den Eingangsdruckkanal 16 in den Arbeitsdruckraum 17 einströmende Volumen über eine Durchgangsbohrung 68 im Kolbenschaft 27 auf eine am Kolbenboden 30 ausgebildete Arbeitsdruckkolbenfläche 32 eine Druckkraft wirkt, die größer ist, als die Federkraft der Druckfeder 29, die zwischen einem Gehäuseabsatz 33 und einem am Kolbenschaft 27 ausgebildeten Stützbund 69 vorgespannt ist.

Mit weiter im Arbeitsdruckraum 17 ansteigendem Druck wird schließlich, wie in Fig. 6 dargestellt, der Ventilkolben 26 mit seiner Dichtkolbenfläche 28 gegen einen im Übergang zum Eingangdruckkanal 16 ausgebildeten Ventilsitz 34 verschoben, so dass über den Eingangsdruckkanal 16 kein weiteres Volumen nachströmen kann und im Arbeitsdruckraum 17 der in seiner Höhe durch die Federkraft der Druckfeder 29 definierte Arbeitsdruck eingestellt ist.

Um zu verhindern, dass beispielsweise aufgrund eines Bauteilversagens am Druckminderventil 14 die in **Fig. 6** dargestellte Schließstellung des Ventilkolbens 26 nicht erreicht wird und es zu einem Ansteigen des Drucks im Arbeitsdruckraum 17 über den gewünschten Arbeitsdruck hinaus kommt, ist im Arbeitsdruckkanal 18 parallel zum Arbeitsdruckausgang 20 **(****Fig. 4****)** das Überdruckventil 15 vorgesehen. Das Überdruckventil 15 weist in einer Ventilaufnahmebohrung 35 einen Ventilkolben 36 auf, der rückwärtig zu einer Dichtkolbenfläche 37 mit einer in ihrer Vorspannung über eine Vorspanneinrichtung 38 einstellbaren Druckfeder 39 zur Einstellung eines Auslösedrucks beaufschlagt wird.

Die in **Fig. 6** dargestellte Konfiguration der Druckmindervorrichtung 10 zeigt diese in betriebsbereitem Zustand, so dass bei Betätigung eines an den Arbeitsdruckausgang 20 angeschlossenen Verbrauchers, also beispielsweise bei Auslösung eines Drucknaglers, das Volumen aus dem Arbeitsdruckraum 17 durch den Arbeitsdruckkanal 18 ausströmt und in Folge des damit einhergehenden Druckabfalls im Arbeitsdruckraum 17 unter Wirkung der Druckfeder 29 eine Verlagerung des Ventilkolbens 26 in seine in **Fig. 5** dargestellte Öffnungsstellung erfolgt und anschließend erneut der Arbeitsdruckraum 17 durch aus dem Eingangsdruckkanal 16 nachströmendes Volumen bis zum Erreichen des Arbeitsdrucks wieder befüllt wird.

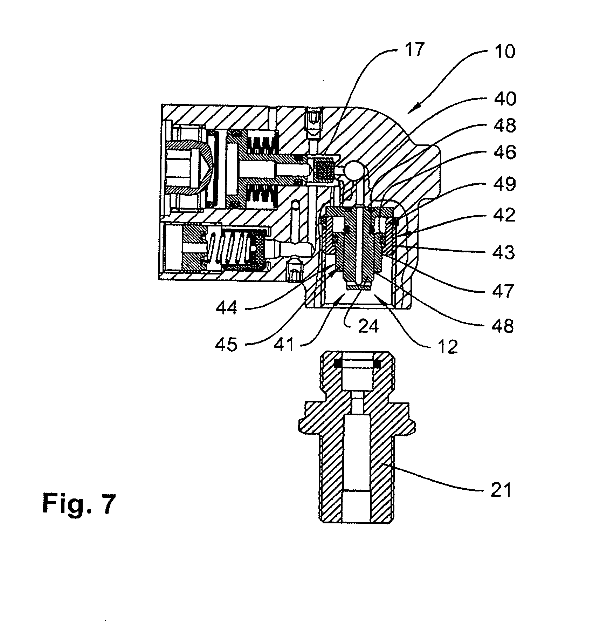

**Fig. 7** zeigt die Druckmindervorrichtung 10 unmittelbar nach Entfernung der Kartusche 22 bzw. des Anschlussstücks 21 der Kartusche 22 von der Druckanschlusseinrichtung 12. Dabei wird eine über einen Entlüftungskanal 40 mit dem Arbeitsdruckraum 17 in Verbindung stehende, an der Druckanschlusseinrichtung 12 ausgebildete Entlüftungseinrichtung 41 betätigt. Die Entlüftungseinrichtung 41 weist einen Entlüftungszylinder 42 auf, der durch die konzentrische Anordnung einer Einschraubhülse 43 der Druckanschlusseinrichtung 12 auf dem Anschlussstutzen 24 der Druckanschlusseinrichtung 12 gebildet ist. In dem Entlüftungszylinder 42 ist ein Entlüftungskolben 44 geführt, der einen als Zylindermantel ausgebildeten Kolbenschaft 45 mit einem kreisringförmig ausgebildeten Kolbenboden 46 aufweist.

Wie insbesondere **Fig. 6** zeigt, wird der Entlüftungskolben 44 bei an die Druckanschlusseinrichtung 12 angeschlossenem Anschlussstück 21 durch letzteres in seine obere Endposition gedrückt. Bei Entfernung des Anschlussstücks 21 aus der Druckanschlusseinrichtung 12 erfolgt durch den im Entlüftungskanal 40 anstehenden Arbeitsdruck über eine im Anschlußstutzen 24 ausgebildete, hier nicht näher dargestellte Verbindungsbohrung eine Druckbeaufschlagung des Kolbenbodens 46 mit Verschiebung des Entlüftungskolbens 44 erfolgt, bei der, wie in **Fig. 7** dargestellt, der Kolbenschaft 45 des Entlüftungskolbens 44 nach unten durch eine Durchtrittsbohrung 47 des Entlüftungszylinders 42 herausgeführt wird. In Folge der Verschiebung des Entlüftungskolbens 44 in seine untere Entlüftungsposition ist der Kolbenboden 46 unterhalb einer auf dem Anschlussstutzen 24 angeordneten Entlüftungsdichtung 48 angeordnet, so dass aus einem durch den Kolbenboden 46 begrenzten Ventilraum 49 Volumen durch einen zwischen dem Anschlussstutzen 24 und dem konzentrisch hierzu angeordneten Kolbenschaft 45 gebildeten, zylinderförmigen Entlüftungsspalt 48 nach ausströmen kann.

Auf diese Art und Weise ist sichergestellt, dass der Arbeitsdruckraum 17 nach Entfernung der Kartusche 22 zwangsentlüftet wird, so dass ein versehentliches Auslösen eines mit dem Arbeitsdruckausgang 20 der Druckmindervorrichtung 10 verbundenen Arbeitsgerätes nicht möglich ist.

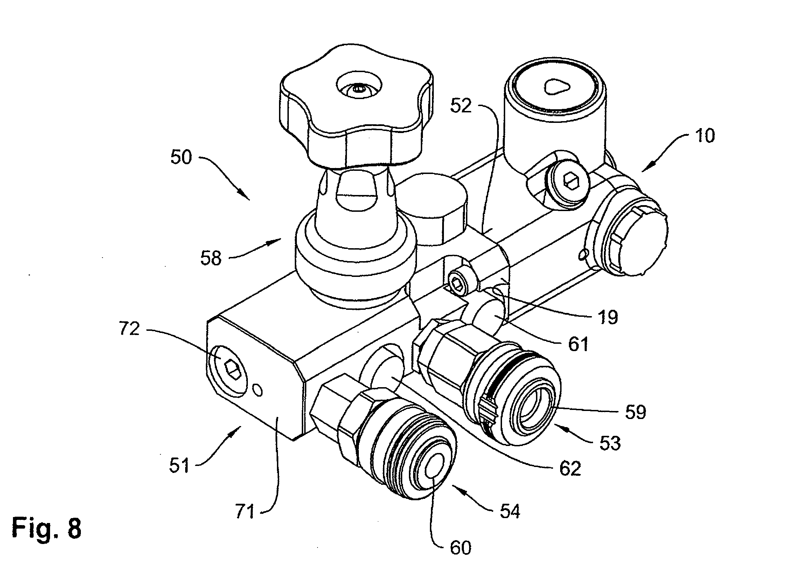

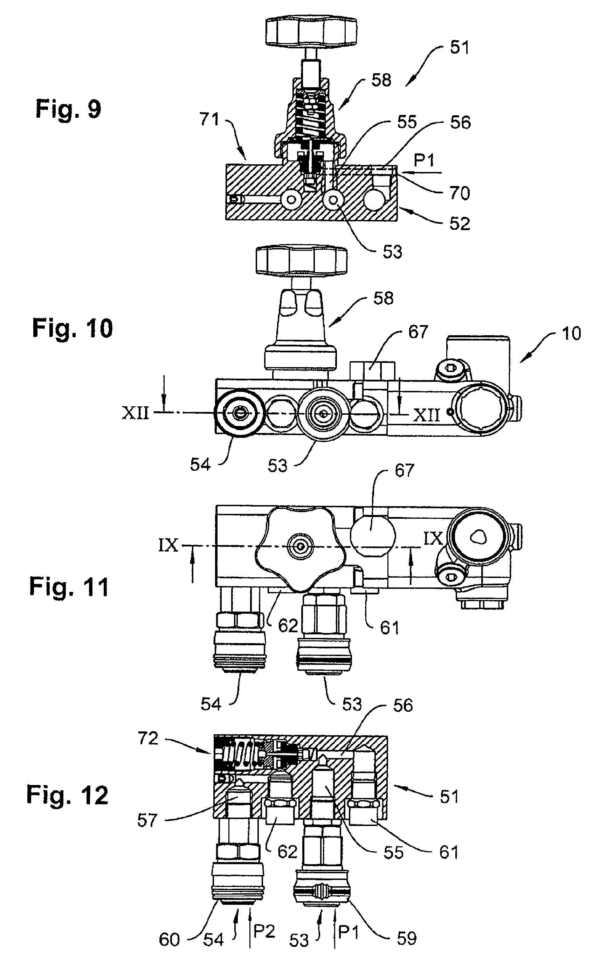

**Fig. 8** zeigt in einer isometrischen Darstellung die in den **Fig.** 1 bis 7 dargestellte Druckmindervorrichtung 10, die zur Ausbildung eines Druckverteilers 50 mit einem Geräteanschlussteil 51 verbunden ist, das ebenfalls in den **Fig. 9 bis 12** dargestellt ist. Das Geräteanschlussteil 51 ist mit einer Anschlussseite 52 seines Anschlussgehäuses 71 (**Fig. 9**) so an die Druckausgangsseite 19 (**Fig. 4****)** der Druckmindervorrichtung 10 angeschlossen, dass der Arbeitsdruckausgang 20 der Druckmindervorrichtung 10 in Überdeckung mit einem Arbeitsdruckeingang 70 in der Anschlussseite 52 des Geräteanschlussteils 51 angeordnet ist (**Fig. 9**).

Wie aus einer Zusammenschau der **Fig. 8** bis **12** zu entnehmen ist, weist das Geräteanschlussteil 51 zwei Arbeitsdruckausgänge 53 und 54 auf, wobei der Arbeitsdruckausgang 53 über einen Arbeitsdruckkanal 55 unmittelbar in Verbindung mit einem Arbeitsdruckkanal 56 steht, in dem der durch die Druckmindervorrichtung 10 bestimmte Arbeitsdruck p1 ansteht. Dem hingegen steht der Arbeitsdruckausgang 54 über einem Arbeitsdruckkanal 57 in Verbindung mit einem Druckminderventil 58 (**Fig. 8**), das den Arbeitsdruck p 1 auf einen Arbeitsdruck p2 reduziert. Jeweils parallel zu den Arbeitsdruckausgängen 53, 54, die jeweils mit einer Druckanschlusseinrichtung 59, 60 versehen sind, befindet sich ein Überdruckventil 61 bzw. 62. Wie **Fig. 12** zeigt, ist parallel zum Arbeitsdruckausgang 54 zur Begrenzung eines maximalen Arbeitsdrucks p2 ein Druckbegrenzungsventil 72 vorgesehen.

Der in **Fig. 8** dargestellte Druckverteiler 50 ermöglicht somit wahlweise den Anschluss eines Verbrauchers bzw. eines Druckluftgeräts an die Druckanschlusseinrichtung 59 des Arbeitsdruckausgangs 53 mit dem Arbeitsdruck p1 oder an die Druckanschlusseinrichtung 60 des Arbeitsdruckausgangs 54 mit dem gegenüber dem Arbeitsdruck p1 reduzierten Arbeitsdruck p2. Beispielsweise kann der Arbeitsdruck p2 bei entsprechender Auswahl der in der Druckmindervorrichtung 10 installierten Druckfeder 29 23 bar und der über das Druckminderventil 58 reduzierte Arbeitsdruck p2 6 bar betragen.

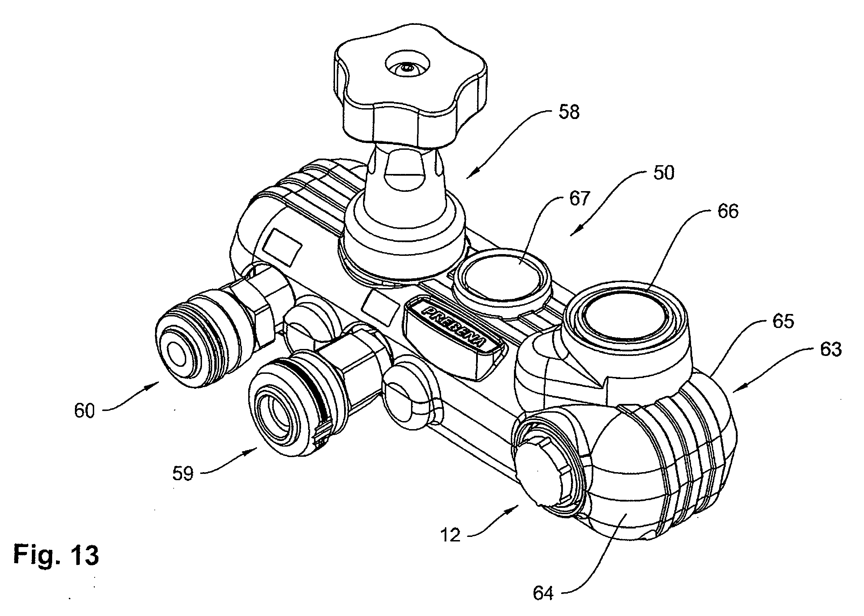

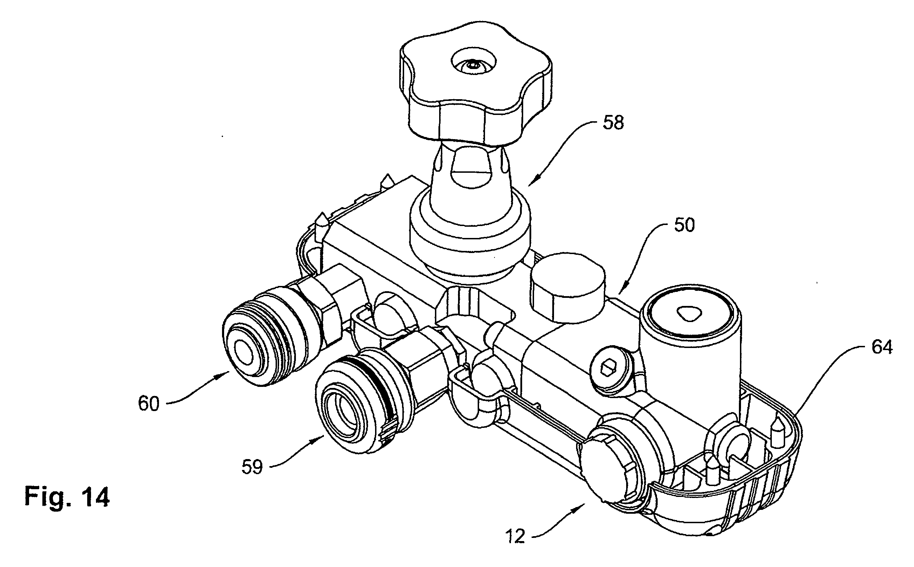

Wie aus den **Fig. 13** und **14** hervorgeht, kann der Druckverteiler 50 mit einem hier sowohl thermisch isolierend als auch vor Stoßbeanspruchungen schützend ausgeführten Schutzgehäuse 63 versehen sein, das, wie dargestellt, vorzugsweise zweiteilig, nämlich mit einer Unterschale 64 und einer Oberschale 65 versehen sein kann. Dabei sind zum einen die Druckanschlusseinrichtungen 12 bzw. 59 und 60 durch Gehäuseöffnungen frei zugänglich bzw. aus dem Schutzgehäuse 63 herausgeführt und zum anderen auch das Druckminderventil 58 sowie eine mit dem Eingangsdruckkanal 16 der Druckmindervorrichtung 10 verbundene Füllstandsanzeige 66 für eine mit der Druckanschlusseinrichtung 12 verbundene Kartusche. Darüber hinaus ist ein Manometer 67 zur Anzeige des vermittels des Druckminderventils 58 reduzierten Arbeitsdruckes p2 sowie eine Einstellvorrichtung für das Druckminderventil 58 sichtbar bzw. frei zugänglich am Schutzgehäuse 63 angeordnet.

## Patentansprüche

1. Druckluftverteiler (50) mit einer Druckmindervorrichtung (10) für druckmittelbetriebene Arbeitsgeräte, insbesondere Handarbeitsgeräte, mit einer Druckanschlusseinrichtung (12) zum Anschluss an eine Eingangsdruckquelle, einem Arbeitsdruckausgang (20) zur Verbindung mit dem Arbeitsgerät und einem Druckminderventil (14) zur Trennung eines Eingangsdruckkanals (16) von einem Arbeitsdruckraum (17), wobei das Druckminderventil einen doppelt wirkenden Ventilkolben (26) mit einer entgegen der Federkraft einer Ventilfeder (29) vom Arbeitsdruck beaufschlagten Arbeitsdruckkolbenfläche (32) und eine Dichtkolbenfläche aufweist die in derselben Richtung, in der der Ventilkolben durch die Federkraft beaufschlagt wird, mit dem Eingangsdruck beaufschlagt wird, wobei die Dichtkolbenfläche zur Abdichtung des Eingangsdruckkanals gegenüber dem Arbeitsdruckraum dient, wobei der Arbeitsdruckraum über einen Entlüftungskanal (40) mit einer an der Druckanschlusseinrichtung ausgebildeten Entlüftungseinrichtung (41) verbunden ist, derart, dass eine durch ein Anschlussstück (21) der Eingangsdruckquelle in seiner Schließstellung gehaltener Entlüftungskolben (44) der Entlüftungseinrichtung mit dem Arbeitsdruck beaufschlagt wird und mit einem Geräteanschlussteil (51), wobei der Arbeitsdruckausgang (20) der Druckmindervorrichtung über einen Arbeitsdruckeingang (70) im Geräteanschlussteil an einen Arbeitsdruckkanal (56) im Geräteanschlussteil angeschlossen ist, wobei der Arbeitsdruckkanal mit einer ersten Druckanschlusseinrichtung (59) für ein mit einem relativ hohem Arbeitsdruck betriebenes Arbeitsgerät verbunden ist, und der Arbeitsdruckkanal parallel zur ersten Druckanschlusseinrichtung mit zumindest einer weiteren Druckanschlusseinrichtung (60) verbunden ist, die zum Anschluss eines mit relativ niedrigem Arbeitsdruck betriebenen Arbeitsgeräts dient, wobei die Verbindung des Arbeitsdruckkanals mit der weiteren Druckanschlusseinrichtung über ein Druckminderventil (58) erfolgt.

2. Druckluftverteiler nach Anspruch 1,
**dadurch gekennzeichnet,**
**dass** die Entlüftungseinrichtung (41) als Bestandteil der Druckanschlusseinrichtung (12) ausgebildet ist, derart, dass ein Anschlussstutzen (24) der Druckanschlusseinrichtung zur Ausbildung eines Entlüftungszylinders (42) für den Entlüftungskolben (44) von einer Zylinderhülse (43) umgeben ist, derart, dass der Entlüftungskolben in Folge einer Montage des Anschlussstücks an der Druckanschlusseinrichtung in seine Schließstellung verschoben wird.

3. Druckluftverteiler nach Anspruch 2,
**dadurch gekennzeichnet,**
**dass** zur Entlüftung aus dem Entlüftungszylinder (42) zwischen dem Anschlussstutzen (24) und dem Entlüftungskolben (44) ein Ringspalt (48) ausgebildet ist.

4. Druckluftverteiler nach einem der vorangehenden Ansprüche,
**dadurch gekennzeichnet,**
**dass** der Ventilkolben (26) des Druckminderventils (14) zur Beaufschlagung der Arbeitsdruckkolbenfläche (32) mit einer in einem Kolbenschaft (27) ausgebildeten zentralen Durchgangsbohrung (68) versehen ist.

5. Druckluftverteiler nach einem der vorangehenden Ansprüche,
**dadurch gekennzeichnet,**
**dass** zur Ausbildung der Ventilfeder eine auf dem Kolbenschaft (27) geführte Druckfeder (29) vorgesehen ist, die sich mit einem Federende an einem in einer Ventilbohrung ausgebildeten Gehäuseabsatz (33) und mit dem gegenüberliegenden Federende an einem am Kolbenschaft ausgebildeten Stützbund (69) abstützt.

6. Druckluftverteiler nach einem der vorangehenden Ansprüche,
**dadurchgekennzeichnet,**
dass das Geräteanschlussteil (51) ein modular mit der Druckmindervorrichtung (10) verbindbares Anschlussgehäuse aufweist.

7. Druckluftverteiler nach einem der vorangehenden Ansprüche,
**dadurchgekennzeichnet,**
dass die Druckmindervorrichtung (10) zusammen mit dem Geräteanschlussteil (51) in einem gemeinsamen Gehäuse aufgenommen ist.

8. Druckluftverteiler nach Anspruch 7,
**dadurch gekennzeichnet,**
**dass** das Gehäuse als Schutzgehäuse (63) ausgebildet ist.

9. Druckluftverteiler nach Anspruch 7 oder 8,
**dadurchgekennzeichnet,**
dass das Gehäuse thermisch isolierend ausgebildet ist.

## Claims

1. A compressed air distributor (50) comprising a pressure reducing device (10) for tools, in particular handheld tools, which are operated by a pressure medium, comprising a pressure attachment unit (12) for attachment to an inlet pressure source, a working pressure outlet (20) for connection to the tool and a pressure reducing valve (14) for separating an inlet pressure channel (16) from a working pressure chamber (17), wherein the pressure reducing valve has a double-acting valve piston (26) comprising a working pressure piston surface (32), which is impinged by the working pressure against the spring force of a valve spring (29), and has a sealing piston surface, which is impinged by the inlet pressure in the same direction in which the valve piston is impinged by the spring force, wherein the sealing piston surface is used for sealing the inlet pressure channel off from the working pressure chamber, wherein the working pressure chamber, via a ventilation duct (40), is connected to a ventilation unit (41), which is realised at the pressure attachment unit, in such a manner that a ventilation piston (44), which is held in its closed position by means of an attachment piece (21) of the inlet pressure source, of the ventilation unit is impinged by the working pressure and with a tool attachment element (51), wherein the working pressure outlet (20) of the pressure reducing device is attached to a working pressure channel (56) within the tool attachment element via a working pressure inlet (70) within the tool attachment element, wherein the working pressure channel is connected to a first pressure attachment unit (59) for a tool, which is operated with a comparatively high working pressure, and the working pressure channel, in parallel to the first pressure attachment unit, is connected to at least one further pressure attachment unit (60) that is used for attaching a tool, which is operated with a comparatively low working pressure, wherein the connection of the working pressure channel to the further pressure attachment unit is effected via a pressure reducing valve (58).

2. The compressed air distributor according to claim 1,
**characterised in that**
the ventilation unit (41) is realised as a component of the pressure attachment unit (12), in such a manner that an attachment part (24) of the pressure attachment unit is surrounded by a cylinder sleeve (43) for realising a ventilation cylinder (42) for the ventilation piston (44), in such a manner that the ventilation piston is moved into its closed position following an installation of the attachment piece at the pressure attachment unit.

3. The compressed air distributor according to claim 2,
**characterised in that**
for ventilation from the ventilation cylinder (42), an annular gap (48) is realised between the attachment part (24) and the ventilation piston (44).

4. The compressed air distributor according to one of the preceding claims,
**characterised in that**
the valve piston (26) of the pressure reducing valve (14) is provided with a central passage borehole (68), which is realised within a piston skirt (27), for impinging upon the working pressure piston surface (32).

5. The compressed air distributor according to one of the preceding claims,
**characterised in that**
for realising the valve spring, a pressure spring (29) is provided, which is guided on the piston skirt (27), and which supports itself, with one spring end, at a housing shoulder (33), which is realised within a valve borehole, and, with the opposite spring end, at a supporting collar (69), which is realised at the piston skirt.

6. The compressed air distributor according to one of the preceding claims,
**characterised in that**
the tool attachment element (51) has an attachment housing, which can be connected to the pressure reducing device (10) in a modular manner.

7. The compressed air distributor according to one of the preceding claims,
**characterised in that**
the pressure reducing device (10) is accommodated in a common housing together with the tool attachment element (51).

8. The compressed air distributor according to claim 7,
**characterised in that**
the housing is realised as a protective housing (63).

9. The compressed air distributor according to claim 7 or 8,
**characterised in that**
the housing is realised in a manner to be thermally insulating.

## Revendications

1. Distributeur d'air comprimé (50) ayant un détendeur (10) pour des outils de travail actionnés par un agent de pression, en particulier pour des outils à main, ayant une unité (12) de raccord de refoulement destinée au raccordement à une source de pression d'alimentation, ayant une sortie (20) de pression de fonctionnement destiné a relier avec l'outil de travail et avec une vanne de détente (14) pour séparer un canal (16) de pression d'alimentation d'une chambre (17) de pression de fonctionnement, dans lequel la vanne de détente présente un piston (26) à double effet, ayant une surface (32) de piston de pression de fonctionnement étant alimentée en pression de fonctionnement contre l'effet de ressort d'un ressort de soupape, et une surface de piston d'étanchéité qui est alimentée en la pression d'alimentation dans la même direction dans laquelle le piston est alimenté en l'effet de ressort, dans lequel la surface de piston d'étanchéité sert à étancher le canal de pression d'alimentation par rapport à la chambre de pression de fonctionnement, dans lequel la chambre de pression de fonctionnement est reliée, à travers un canal (40) de désaération, avec une unité (41) de désaération étant réalisée à l'unité de raccord de refoulement, tellement qu'un piston (44) de désaération de l'unité de désaération étant maintenu dans sa position fermée par une pièce de raccordement (21) de la source de pression d'alimentation est alimenté en la pression de fonctionnement, et ayant une pièce de raccordement d'appareil (51), dans lequel la sortie (20) de pression de fonctionnement du détendeur est raccordée à un canal (56) de pression de fonctionnement dans la pièce de raccordement d'appareil à travers une entrée (70) de pression de fonctionnement dans la pièce de raccordement d'appareil, dans lequel le canal de pression de fonctionnement est relié avec une première unité (59) de raccord de refoulement pour un outil de travail étant actionné avec une pression de fonctionnement relativement élevée, et le canal de pression de fonctionnement est relié, parallèlement à la première unité de raccord de refoulement, avec au moins une autre unité (60) de raccord de refoulement qui sert à raccorder un outil de travail étant actionné avec une pression de fonctionnement relativement basse, dans lequel le canal de pression de fonctionnement est relié avec l'autre unité de raccord de refoulement à travers une vanne de détente (58).

2. Distributeur d'air comprimé selon la revendication 1,
**caractérisé en ce que**
l'unité (41) de désaération est réalisée comme composant de l'unité (12) de raccord de refoulement, tellement qu'un raccord (24) de l'unité de raccord de refoulement, pour réaliser un vérin (42) de désaération pour le piston (44) de désaération, est entouré par un manchon de vérin (43), tellement que le piston de désaération est déplacé vers sa position fermée à la suite d'une montage de la pièce de raccordement à l'unité de raccord de refoulement.

3. Distributeur d'air comprimé selon la revendication 2,
**caractérisé en ce que**
pour la désaération, un passage annulaire (48) est réalisé à partir du vérin (42) de désaération entre le raccord (24) et le piston (44) de désaération.

4. Distributeur d'air comprimé selon l'une quelconque des revendications précédentes,
**caractérisé en ce que**
le piston (26) de la vanne de détente (14) est muni, pour alimenter la surface (32) de piston de pression de fonctionnement, d'un vide de forure (68) central étant réalisé dans une tige (27) de piston.

5. Distributeur d'air comprimé selon l'une quelconque des revendications précédentes,
**caractérisé en ce que**
pour réaliser le ressort de soupape, un ressort à pression (29) étant guidé sur la tige (27) de piston est prévu, ledit ressort s'appuyant, sur l'une des extrémités de ressort, à un gradin de boîtier (33) étant réalisé dans une forure de vanne et, sur l'extrémité de ressort opposée, à un collet (69) d'appui étant réalisé à la tige de piston.

6. Distributeur d'air comprimé selon l'une quelconque des revendications précédentes,
**caractérisé en ce que**
la pièce de raccordement d'appareil (51) présente un boîtier de raccordement qui peut être relié avec le détendeur (10) de façon modulaire.

7. Distributeur d'air comprimé selon l'une quelconque des revendications précédentes,
**caractérisé en ce que**
le détendeur (10) est reçu dans un boîtier commun avec la pièce de raccordement d'appareil (51).

8. Distributeur d'air comprimé selon la revendication 7,
**caractérisé en ce que**
le boîtier est réalisé comme un boîtier de protection (63).

9. Distributeur d'air comprimé selon la revendication 7 ou 8,
**caractérisé en ce que**
le boîtier est réalisé de façon à isoler thermiquement.
